# EUROPEAN PATENT SPECIFICATION

(11) **EP 1 712 490 B1**
(45) Date of publication and mention of the grant of the patent: **09.07.2008**
(21) Application number: 05019031.3
(22) Date of filing: 01.09.2005
(51) Int. Cl.: B65D 81/38, B65D 3/22, B29C 65/02

(54) **Insulated container and method of manufacturing the same**
Isolierter Behälter und Verfahren zur dessen Herstellung
Récipient isolé et procédé pour sa fabrication

(30) Priority: 15.04.2005 US 672195 P
(43) Date of publication of application: 18.10.2006
(60) Divisional application: 07022427.4
(73) Proprietor: SEDA S.p.A., I-80022 Arzano-Napoli (IT)
(72) Inventor: D'Amato, Gianfranco, 80022 Arzano Napoli (IT)
(74) Representative: Grünecker, Kinkeldey, Stockmair & Schwanhäusser Anwaltssozietät

(56) References cited:
- EP-A- 1 031 514
- WO-A-03/057577
- DE-U1- 20 110 390
- US-A- 4 007 670
- US-A- 4 344 814
- US-A- 5 460 323
- PATENT ABSTRACTS OF JAPAN vol. 2002, no. 02, 2 April 2002 (2002-04-02) -& JP 2001 293802 A (TOPPAN PRINTING CO LTD), 23 October 2001 (2001-10-23)
- PATENT ABSTRACTS OF JAPAN vol. 2000, no. 07, 29 September 2000 (2000-09-29) -& JP 2000 103479 A (DAINIPPON PRINTING CO LTD), 11 April 2000 (2000-04-11)
- PATENT ABSTRACTS OF JAPAN vol. 2000, no. 07, 29 September 2000 (2000-09-29) -& JP 2000 103478 A (DAINIPPON PRINTING CO LTD), 11 April 2000 (2000-04-11)
- PATENT ABSTRACTS OF JAPAN vol. 2002, no. 02, 2 April 2002 (2002-04-02) -& JP 2001 294282 A (FUJI SEAL INC), 23 October 2001 (2001-10-23)

## Description

The invention generally relates to containers. It relates particularly to insulated containers for hot drinks or the like and a method of fabricating such containers.

There are many examples in the prior art of containers with insulation features for use with hot liquids such as coffee, tea, soups and the like. Examples may be found in US-A-2,266,828, US-A-4,007,670, US-A-5,145,107, US-A-5,460,323, US-A-5,524,817, US-A-5,685,480, and US-A-6,663,926. Each of these containers includes an inner cup and an outer shell separated by an air gap. In modem containers of this type the cup is fabricated of thin paperboard coated inside with a polyethylene resin or the like. The cup and shell are fastened together by gluing them in strategic locations at top and bottom or, in some recent instances, by hot sealing. The air gap between the cup body wall and shell may be maintained by spacers of varying configuration.

Document JP 2001/293802 discloses a cup made of paper with an inner wall and an outer wall that are bonded together by applied heat-sealing varnish to the perimeter of the wall. The outer wall comprises a curl part on its end directed to the opening of the container. The inner wall has a mouth edge part that is bonded and fixed to the outside surface of the curl part through the circular heat-seal varnish.

Document US 5,460,323 shows a container with an inner wall and an outer wrap. The side wall portion of the inner wall is arcuately inwardly bowed. The container is formed of three blanks, which are coated on at least one side. The overlap is sealed. The bottom is sealed with lower edge portion of the blank. The outer wrap is wrapped about the inner container, the coating on the edge portion is heated and then the two parts are bonded together when they are overlapped and pressed together. Further, the lower portions of these heated edge portions bond to the lower skirt portion.

Document JP 2001/294282 shows a container with a body that has many longitudinal ribs protruding outward, and the top end edge has a flange part. On the total periphery of the body an adhesive tape is wound around to connect the ribs and a shrink label is provided.

Document US 4,344,814 shows an apparatus for heat sealing round containers. The container is formed from a blank that is folded to form a plurality of overlapping, side wall seams that must be bonded together. The apparatus comprises an annularly shaped, heated collar that is shiftable into engagement with the rim of the container and then heat is applied evenly along the entire periphery. There is also a male block member that is inserted into the interior of the container. Further extensions extend longitudinally and also include an electrical heating element. Thus, collar sections apply heat to the rim and the extension applies heat to the longitudinally extending seam of the blank so that the container is sealed together.

It is an object of the present invention to provide an improved insulated container and a method of fabricating same such that improved bonds between cup and shell are possible by an improved method of bonding in a simple way.

The foregoing and other objects are realized by an insulated container with the features of claim 1 and a method of fabricating such a container with the features of claim 10.

The thermo-sealable plastic coating is provided on at least one of the inside of said shell or the outside of said cup body and after heating the coating and seating the cup within the shell at least one bonding spot and/or bonding area for bonding said shell to said cup body by the plastic coating is only locally formed within a corresponding contact path. This "contact path" is generally a virtual contact path where outer surface of cup body and inner surface of the shell may be in contact when the cup is seated within the shell. However, it is not necessary that there is an actual contact between the corresponding walls of shell and cup body along all of their circumference but the contact path may only extend partially along the circumference wherein within this contact path corresponding bonding spots and/or bonding areas are located. Those are only locally formed by the corresponding method wherein shell and cup wall are pressed together at least at one of such bonding spots and/or one of such bonding areas which are localized within said contact path.

As the corresponding thermo-sealable plastic coating is melted prior to inserting the cup in the shell both then will be bonded in the corresponding bonding spots and/or bonding areas by this coating after hardening.

Of course, it is also possible that the contact path is an annular path which also may completely circulate cup body and shell and may have a certain extension in vertical direction which means perpendicular to the corresponding circumferential direction.

It is sufficient to only use one bonding spot or bonding area as they are only used to prevent losing the inner cup during handling the container for assembly, packaging, nesting or the like. After a corresponding hot drink or the like is filled in the container the inner cup will remain within the shell mainly by the weight of the corresponding drink such that a corresponding bonding spot or bonding area only needs to provide quite little bonding force.

However, it is also possible to more securely fix cup body and shell to each other by, for example, providing a number of bonding spots and/or bonding areas formed along the contact path, all separated from each other by bonding free parts of said contact path. Moreover, the bonding spots and/or bonding areas may be arranged side-by-side and separated from each other in horizontal and/or vertical direction within the contact path. This means that single bonding spots or bonding areas are arranged in horizontal or vertical direction or that a group is formed by such bonding spots or bonding areas which, for example, are arranged in vertical direction and that such groups are then arranged side-by-side in horizontal or circumferential direction.

It is possible to provide the corresponding bonding spots and/or bonding areas unevenly distributed in circumferential direction. To improve the assembly of the container and also the corresponding method of fabricating it may be advantageous if the corresponding spots or areas are evenly distributed.

The corresponding insulated container has a gap between cup wall and shell wall in a lower section of the container and generally the air gap should be maintained without any heat transferring connections. Consequently, it will be advantageous to form the corresponding contact path between an annular upper wall section of the cup body and an upper essentially cylindrical section of said shell. In this part of the container a corresponding gap is not necessary as the contact path is arranged higher than the level of the beverage filled in the container.

It is also possible to arrange said bonding spots and/or bonding areas immediately adjacent to the lower edge of said annular upper wall section of the cup body, where an upper shoulder is formed. Below this upper shoulder the gap will start.

Different materials are possible for shell or cup wherein also at least one of those may be made of a corresponding plastic material. For recycle reasons it is also possible that cup and/or shell are made of paperboard. To obtain sufficient fluid density of at least the cup the corresponding paperboard for forming the cup is coated with the above mentioned polyethylene resin or the like. Of course, the paperboard can also be coated with the thermo-sealable plastic coating wherein it may be provided on the outside of the cup wall, the inside of the shell wall or also may be arranged on both of those walls.

The corresponding bonding spots or bonding areas may have different shapes. For example, bonding spots may have circular, rectangular or other cross-section. The corresponding bonding areas may have the form of short stripes wherein the stripes may be horizontally arranged or may also be inclined with respect to circumferential direction.

For melting the corresponding plastic coating it is sufficient to only heat it locally but it is also possible that, for example, the plastic coating as an annular strip is completely heated.

For obtaining sufficient force to press cup wall and shell wall together until the thermo-sealable plastic coating is again hardened an annular first member with at least one radially displaceable or protruding pressing element is positioned inside the cup body which pressing member presses against an external second member to press the walls of cup body and shell together by both members to form one or more bonding spot and/or bonding area. It is of course also possible that the corresponding pressing members are part of the external second member or that those pressing members are provided by both members.

It is also possible that such pressing members are not in direct contact with one of the walls of the container but that they deform, for example, an annular and flexible ring from its inside and that this ring with its deformed parts on its outside will then press the walls of cup body and shell together by cooperation with the other member.

A corresponding apparatus for bonding outer shell and inner cup to form an insulated container for hot liquids or the like comprises such first member to be arranged within the inner cup, such second member generally concentric with said first member and arranged outside the outer shell, and at least one radially protruding or movable pressing member to press opposed shell and cup walls together to form one or more bonding spots and/or bonding areas along the circumference of shell and cup.

The first member may be an annular ring or a disk that is inserted within the cup body. This annular ring or disk may support the corresponding pressing member or members such that they are movable in radial direction.

A simple embodiment of such a movable pressing member is a plunger movably supported by said first and/or second member.

To obtain evenly distributed bonding spots or bonding areas the corresponding number of radially movable pressing elements are also evenly distributed along the circumference of first or second member.

To arrange the shell prior to insertion of the cup body it is advantageous that the apparatus comprise a receiving member with at least a skirt portion and an upper flange used for holding the shell.

To use the corresponding receiving member also as a second or external member it is possible that a counter pressing extension extends from the upper flange of the receiving member in essentially vertical direction. Then, the corresponding movable pressing members may be part of the first or annular member and no second and separate member is necessary.

It is also possible to use the receiving member for holding the cup body in a predetermined position wherein this may be realized by an upper end of the counter pressing extension which is used as a seat for the outward curl of the cup body.

The invention, including the construction of the container and its method of manufacture, is illustrated more or less diagrammatically in the drawings, in which:
FIGURE 1 is a side elevational view of an insulated container comprising an inner cup, an outer shell and embodying a first form of the present invention;
FIGURE 2 is a bottom plan view of the container of Figure 1;
FIGURE 3 is a side elevational view of the container in Figure 1, with the elements of the container in vertical section;
FIGURE 4 is an enlarged, vertical sectional view through the top of the shell of the container of Figure 1, showing a first container assembly step;
FIGURE 5 is a view similar to Figure 4 showing insertion of the cup in the shell;
FIGURE 6 is a view similar to Figure 4 showing dot welding of the shell and cup in a further container assembly step;
FIGURE 7 is a top plan view of the container and a corresponding tool or apparatus for dot welding;
FIGURE 8 is a perspective view of a container matted with the tool of Figure 7 for dot welding according to the invention;

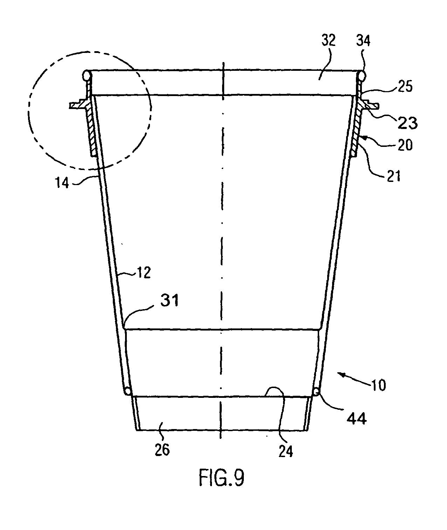

FIGURE 9 is a view similar to Figure 3 of an insulated container embodying a second form of the present invention;
FIGURE 10 is a view similar to Figure 4 of the second container embodiment showing the first assembly step;
FIGURE 11 is a view similar to Figure 5 of the second container embodiment in a further assembly step, and
FIGURE 12 is a view similar to Figure 6 of the second container embodiment showing a further assembly step.

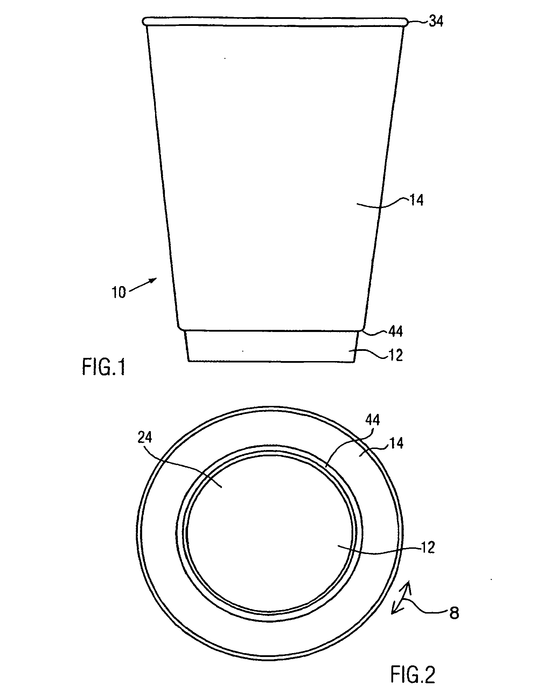

Referring now to the drawings, in particular to Figures 1 to 3, a hot drink container embodying features of a first form of the present invention is illustrated generally at 10. The container includes an inner cup 12 and an outer shell 14 telescoped together and spot bonded to each other according to the present invention.

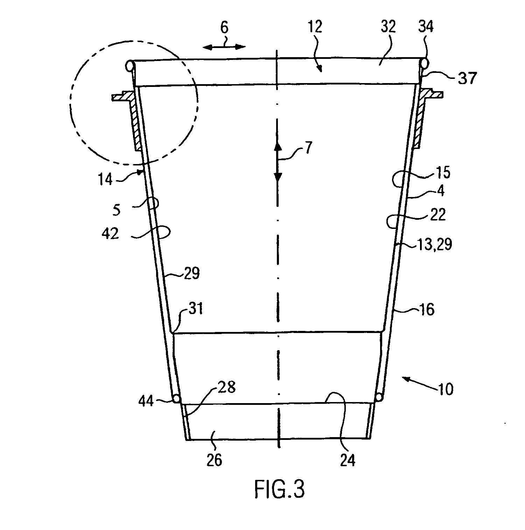

According to Figure 3 the inner cup 12 includes a cup body 22 and a cup bottom 24, separately formed of paperboard in a conventional manner. Prior to fabrication, the paperboard is coated on one side with thermo-sealable plastic material such as polyethylene or the like. The assembled cup 12 then has an internal coating 15 of polyethylene over all or a portion of its internal surface.

A frusto-conical wall 29 of the cup body 22 has an annular shoulder 31 formed inwardly from it near cup bottom 24. The shoulder 31 acts as a stop for the next cup above when cups are stacked.

The cup bottom 24 is seated in the body 22 in the manner illustrated. A segment 26 of the lower edge of the cup wall 29 is folded inwardly and upwardly to capture an annular, downwardly extending skirt section 28 of the cup bottom 24.

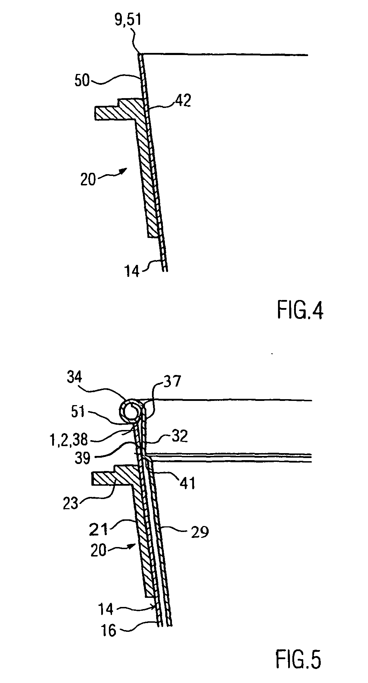

The cup body 22 also has an annular upper shoulder 32 formed outwardly of its frusto-conical side wall 29 for a distance of 5 mm or more downwardly from an outward curl 34 which forms an upper edge of the body. Between shoulder 32 and curl 34 an upper wall section 37 with an annular outer surface 38, see also Figure 5, is arranged with a lower portion 39 of the surface, at shoulder's edge 41, which serves as a bonding spot or bonding area 1 or 2 to which the annular inner surface of the shell 14 is bonded, in a manner hereinafter discussed.

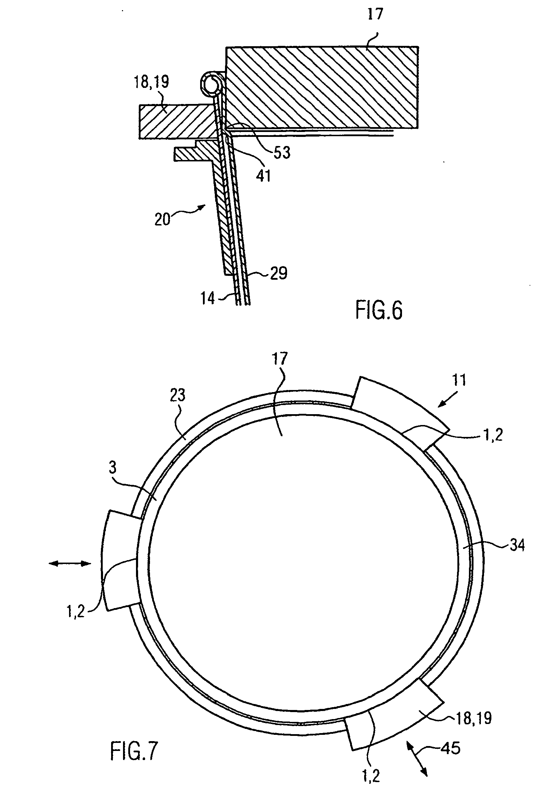

The outer shell 14 is, like the cup wall 29, frusto-conical in shape. The shell 14 is formed from paperboard which has an internal coating 42 of a thermo-sealable plastic material. The internal coating may be over all or only in a bonding area or spot along a corresponding contact path 3, see also Figure 7, of the shell 14. The shell 14 has an inward curl 44, see Figure 3, formed on its lower edge, and this inward curl engages the outer surface 4 of the cup body wall 29 above the lower end of the cup 12 at a distance corresponding approximately to the height of the cup bottom 24.

An annular upper edge 9 or 51, see also Figure 5, of shell 14 is immediately adjacent the curl 34 of the cup body 22 and may abut same from below. The shell 14 extends downwardly from there to a narrow, annular surface where it engages at least partially the upper wall section 37 and the annular outer surface 38 at and slightly above the lower edge 41 of the shoulder 32.

The thermo-sealable plastic coating 42 inside shell 14 is locally melted before cup 12 and shell 14 are assembled. After assembly the shell 14 is thermally bonded at one or more bonding spots or bonding areas 1,2 illustrated, for example, in Figure 6 as the spot weld 53, where it is bonded to the cup body shoulder 32 or the annular outer surface 38 adjacent its lower edge 41, i.e. at a distance of about 5 mm from the curl 34. Although the use of three spot welds 53 annularly spaced at regular intervals is described here, however, there may be as few as one or there may be more than three, and they may not be evenly spaced if more than one is used.

It is also possible to arrange a number of such bonding spots or bonding areas above each other in vertical direction 7, see Figure 3, or side-by-side in horizontal direction 6 or circumferential direction 8, see Figure 2.

Referring now to Figures 4 to 8, container 10 is fabricated according to the invention in the following steps:
- the shell 14 is fabricated of paperboard, which is selectively coated internally with a thermo-sealable plastic material such as polyethylene, by forming around a frusto-conical mandrel;
- the shell is then removed from the mandrel and seated inside the corresponding shaped receiver or receiving member 20, see Figure 4. This receiving member 20 comprises a frusto-conical skirt portion 21, see Figure 5, which is in abutment with the outer surface of the shell wall 16. At the upper end of the skirt portion 21 receiving member 20 has a radially outwardly extending upper flange 23.

In a next step an annular heating element is positioned against the inside of the shell 14 and strips of the polyethylene coating are heated to its melting point, see Figure 6.

A previously assembled cup 12 is then drawn by suction into the shell until the annular periphery of its upper shoulder 32 seats against the shell at the melted strip along the corresponding contact path 3, see also Figure 7.

An annular disk 17 as a first member of a corresponding apparatus 11 for fabricating the corresponding container 10 is then positioned inside the cup body 22 and snugly engages the inner surface of the cup body above the upper shoulder 32, see for example Figures 6 to 8.

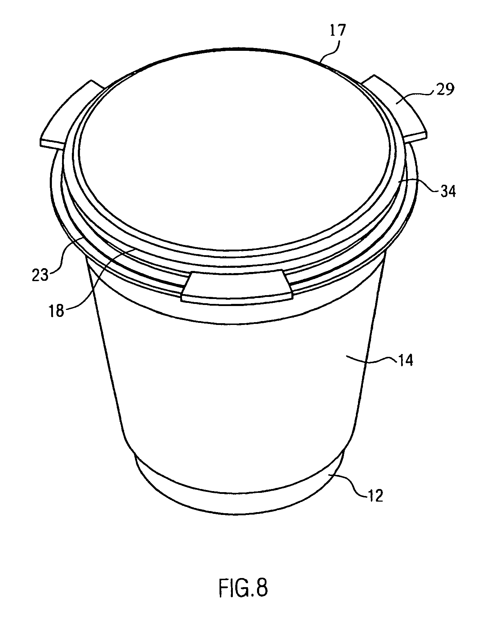

An annular ring 18 as a second member of the corresponding apparatus 11 incorporating three radially extendable plungers as pressing members 19 is then placed around the shell 14 at the level of the melted strip and the plungers are extended to press shell and cup walls together, see for example Figure 6, until they bond together at, for example, three spot welds 53 or bonding spots 1 or bonding areas 2, respectively. Such spot weld is referred to herein as a dot weld, see also Figures 7 and 8.

Disk and ring are then removed and the assembled container is ejected from the receiving member 20.

According to Figure 6 it is not necessary that the upper wall section 37 is contacted by all of the upper end section of shell wall 16 and it is possible that a small gap is provided between both just below outward curl 34. Only along the contact path 3, see Figure 7, which is for example arranged adjacent to the upper annular shoulder 32 corresponding bonding spots or bonding areas may be produced by pressing first member 17 and second member 18 together, see Figures 6 and 7.

In Figure 8, and also Figure 7, the ring-like second member 18 with the plunger 19 is illustrated wherein it is arranged between the upper surface of upper flange 23 of receiving member 20 and the lower end of outward curl 34, see again Figure 6.

In Figure 7 it is also illustrated that the corresponding plungers as pressing members 19 are evenly distributed along circumferential direction 8 around container 10 and that three bonding spots or bonding areas are formed. The corresponding pressing members 19 are movable in displacement direction 45.

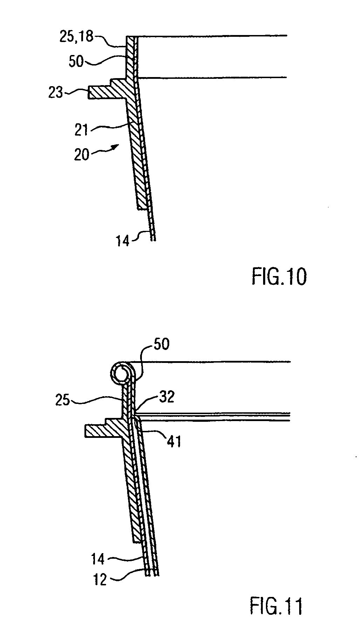

Referring now to Figures 10 to 12, a container embodying features of a second embodiment of the present invention is seen generally at 10 in various stages of assembly. The container 10 is identical in construction to the previous described container, except for one feature. The cup 12 of the container is identical to the previously described cup but shell 14 has a short cylindrical section 50 formed at its upper end. This cylindrical section 50 of shell 14 seats flush against the outer surface 38 of upper wall section 37, see also the previous figures. Cup 12 and shell 14 are spot bonded together at one or more spots 53 as bonding spots 1 or bonding areas 2 corresponding to those in the cup 10, i.e. around shoulder 32 immediately adjacent to its lower edge 41. Although a cylindrical section 50 seats flush against cup 12 above shoulder 32, it should be understood that the section 50 is not bonded to the cup body above the ring of spot bonds 53 and that corresponding spot bonds or spot welds 53 are separated from each other by bonding-free parts of the corresponding contact path 3.

Also the receiving member 20 of the second embodiment is different from the first embodiment in that it has an integrally formed second member 18 which is formed by counter pressing extension 25 vertically extending from an upper surface from upper flange 23 of the receiving member 20. An upper end 27 of extension 25 abut curl 34 from below.

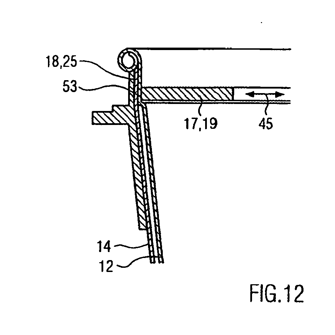

The cup 10 is fabricated according to the invention in the following steps:
- the shell is fabricated of paperboard which is selectively coated internally with the thermo-sealable plastic material such as polyethylene, by forming around a frusto-conical mandrel having an upper, circular cylindrical section;
- the shell 14 is then removed from the mandrel and seated inside the corresponding shaped receiving member 20, see Figure 10;
- an annular heating element is positioned against the inside of the shell 14 and a strip of the polyethylene coating is heated to its melting temperature;
- a previously assembled cup 22 is then drawn by suction into the shell 14 until the annular periphery of the shoulder 31 of the cup body seats against the shell at the melted strip, see Figure 11;
- an annular ring as a first member 17, see Figure 12, incorporating for example three radially extendable plungers as pressing members 19 is then positioned inside the cup body 22 at the level of the melted strip and the plungers are extended to press shell and cup walls together against the external receiving member 20 and in particular against the corresponding counter pressing extension 25 until they are bonded together at, for example, three spot or dot welds 53, see Figure 12;
- the ring 17 is then removed and container 10 is ejected from the receiving member 20.

Each container embodiment hereinbefore described is characterized by having a thermo-sealable plastic coating inside of its shell 14 bonded to the outer surface of a cup 12 by heat and pressure at a plurality of spot welds 53 which may be bonding spots 1 or bonding areas 2. The corresponding spot welds extend around and between those components. Those spot welds lie in an annular path, see contact path 3, adjacent the bottom edge of an upper wall section 37 of the cup body or upper cylindrical section 50 of the shell 14. Either of the container embodiments could also be fabricated by providing the thermo-sealable plastic bonding material applied locally to the exterior of the cup body at the upper wall section 37 without departing from the present invention. In such a case the bonding material would be heated from the outside the cup before inserting it into the shell, of course.

## Claims

1. An insulated container (10) for hot drinks or the like, comprising:
a) an inner cup (12) having a generally frusto-conical cup body (22);
b) a generally frusto-conical outer shell (14);
c) a thermo-sealable plastic coating (42) on at least one of the inside of said shell (14) and the outside of said cup body (22);
d) said cup (12) being seated within said shell (14) so that the coating (42) extends at least along a contact path (3) near an upper edge (9) of the shell (14) along which contact path outer surface of the cup body (22) and inner surface of the shell (14) are in contact,
**characterized in that**
at least one bonding spot (1) and/or bonding area (2) for bonding said shell (14) to said cup body (22) by said plastic coating (42) is only locally formed within said contact path (3).

2. The insulated container according to claim 1, **characterized in that** said contact path (3) is an annular path.

3. The insulated container according to claim 1 or 2, **characterized in that** a number of bonding spots (1) and/or bonding areas (2) are formed along the contact path (3), all separated from each other by bonding-free parts of said contact path.

4. The insulated container according to one of the previous claims, **characterized in that** bonding spot (1) and/or bonding area (2) are arranged side-by-side and separated from each other in horizontal (6) and/or vertical (7) direction within the contact path (3).

5. The insulated container according to one of the previous claims, **characterized in that** bonding spots (1) and/or bonding areas (2) are evenly distributed in circumferential direction (8) of the contact path (3).

6. The insulated container according to one of the previous claims, **characterized in that** the contact path (3) is completely circulating cup body (22) and shell (14).

7. The insulated container according to one of the previous claims, **characterized in that** said contact path (3) is formed between an annular upper wall section (37) of the cup body (22) and an upper essentially cylindrical section (50) of said shell (14).

8. The insulated container according to one of the previous claims, **characterized in that** said bonding spots (1) and/or bonding areas (2) are arranged immediately adjacent to a lower edge (41) of an annular upper wall section (37) of the cup body (22), where an upper shoulder (32) is formed.

9. The insulated container according to one of the previous claims, **characterized in that** cup body (22) and/or shell (14) are made of paper board coated with said thermo-sealable plastic coating (42).

10. A method of fabricating an insulated container for hot drinks or the like, comprising the steps of:
a) forming a generally frusto-conical shell (14);
b) heating a thermo-sealable plastic coating (42) provided on the inside of said shell (14) and/or on the outside of a generally frusto-conical cup (12) to its melting point;
c) inserting said cup (12) into said shell 14) until the outside of the cup wall (13) seats against the inside of the shell (14) along a contact path (3) near an upper edge (9) of the shell (14), so that the melted plastic coating extends at least along said contact path (3),
**characterized by** d) positioning an annular or first member (17) with at least one radially displaceable or protruding pressing element (19) inside the cup body (22), and e) pressing said pressing member against an external or second member (18) to press the walls (13,16) of the cup body (22) and the shell (14) together by both members to form one or more bonding spots (1) and/or bonding areas (2),
which are only localized within said contact path (3).

11. The method according to claim 10, wherein shell and cup wall (16,13) are pressed together forming a plurality of bonding spots (1) and/or bonding areas (2) to locally bond said shell to said cup, said bonding spots and/or areas separated from each other by non-bonding parts along said contact path (3).

12. The method according to claim 10 or 11, **characterized in that** said plastic coating (42) is an annular strip and that said strip is completely heated.

13. The method according to one of the claims 10 to 12, **characterized in that** only parts of said plastic coating (42) are heated, which then form or at least comprise said bonding spots (1) and/or bonding areas (2).

## Patentansprüche

1. Isolierter Behälter (10) für Heißgetränke oder dergleichen, der umfasst:
a) einen inneren Becher (12) mit einem im Allgemeinen kegelstumpfförmigen Becherkörper (22);
b) eine im Allgemeinen kegelstumpfförmige äußere Hülle (14);
c) einen heißsiegelfähigen Kunststoffüberzug (42) auf wenigstens einer der Innenseiten der Hülle (14) oder der Außenseite des Becherkörpers (22);
d) wobei der Becher so in die Hülle (14) gesetzt ist, dass der Überzug (42) über wenigstens einen Kontaktweg (3) verläuft in der Nähe einer oberen Kante (9) der Hülle (14), entlang dieses Kontaktweges sind eine äußere Oberfläche des Becherkörpers (22) und eine innere Oberfläche der Hülle (14) in Kontakt,
**dadurch gekennzeichnet, dass**
wenigstens ein Klebepunkt (1) und/oder eine Klebefläche (2) zum Ankleben der Hülle (14) an dem Becherkörper (22) mit dem Kunststoffüberzug (42) nur lokal innerhalb des Kontaktweges (3) ausgebildet ist.

2. Isolierter Behälter nach Anspruch 1, **dadurch gekennzeichnet, dass** der Kontaktweg (3) ein ringförmiger Weg ist.

3. Isolierter Behälter nach Anspruch 1 oder 2, **dadurch gekennzeichnet, dass** eine Anzahl von Klebepunkten (1) und/oder Klebeflächen (2) entlang des Kontaktweges (3) sämtlich voneinander durch klebefreie Bereiche des Kontaktweges getrennt ausgebildet sind.

4. Isolierter Behälter nach einem der vorangehenden Ansprüche, **dadurch gekennzeichnet, dass** Klebepunkt (1) und/oder Klebefläche (2) nebeneinander und voneinander in horizontaler (6) und/oder vertikaler (7) Richtung getrennt innerhalb des Kontaktweges (3) angeordnet sind.

5. Isolierter Behälter nach einem der vorangehenden Ansprüche, **dadurch gekennzeichnet, dass** Klebepunkte (1) und/oder Klebeflächen (2) gleichmäßig in Umfangsrichtung (8) des Kontaktweges (3) verteilt sind.

6. Isolierter Behälter nach einem der vorangehenden Ansprüche, **dadurch gekennzeichnet, dass** der Kontaktweg (3) den Becherkörper (22) und die Hülle (14) vollständig umschließt.

7. Isolierter Behälter nach einem der vorangehenden Ansprüche, **dadurch gekennzeichnet, dass** der Kontaktweg (3) zwischen einem ringförmigen oberen Wandabschnitt (37) des Becherkörpers (22) und einem oberen, im Wesentlichen zylindrischen Abschnitt (50) der Hülle (14) ausgebildet ist.

8. Isolierter Behälter nach einem der vorangehenden Ansprüche, **dadurch gekennzeichnet, dass** die Klebepunkte (1) und/oder Klebeflächen (2) unmittelbar an eine Unterkante (41) eines ringförmigen oberen Wandabschnitts (37) des Becherkörpers (22) angrenzend angeordnet sind, an der eine obere Schulter (32) ausgebildet ist.

9. Isolierter Behälter nach einem der vorangehenden Ansprüche, **dadurch gekennzeichnet, dass** der Becherkörper (22) und/oder die Hülle (14) aus Pappe bestehen, die mit dem heißsiegelfähigen Kunststoffüberzug (42) überzogen ist.

10. Verfahren zum Herstellen eines isolierten Behälters für Heißgetränke oder dergleichen, das die folgenden Schritte umfasst:
a) Ausbilden einer im Allgemeinen kegelstumpfförmigen Hülle (14);
b) Erhitzen eines heißsiegelfähigen Kunststoffüberzugs (42), der an der Innenseite der Hülle (14) und/oder an der Außenseite eines im Allgemeinen kegelstumpfförmigen Bechers (12) vorhanden ist, auf seinen Schmelzpunkt;
c) Einführen des Bechers (12) in die Hülle (14), bis die Außenseite der Becherwand (13) an der Innenseite der Hülle (14) sitzt, entlang eines Kontaktweges (3) in der Nähe einer oberen Kante (9) der Hülle (14), so dass sich der geschmolzene Kunststoffüberzug wenigstens entlang des Kontaktweges (3) erstreckt, **gekennzeichnet durch**
d) Positionieren eines ringförmigen bzw. ersten Elementes (17) mit wenigstens einem radial verschiebbaren oder vorstehenden Presselement (19) im Inneren des Becherkörpers (22), und
e) Pressen des Presselementes an ein äußeres bzw. zweites Element (18), um die Wände (13, 16) des Becherkörpers (22) und der Hülle (14) mit beiden Elementen zusammenzupressen um einen oder mehrere Klebepunkte (1) und/oder Klebeflächen (2) auszubilden, die nur innerhalb des Kontaktweges (3) angeordnet sind.

11. Verfahren nach Anspruch 10, wobei Hüllen- und Becherwand (16, 13) zusammengepresst werden und eine Vielzahl von Klebepunkten (1) und/oder Klebeflächen (2) bilden, um die Hülle lokal an dem Becher anzukleben, wobei die Klebepunkte und/oder Flächen voneinander durch nicht klebende Bereiche entlang des Kontaktweges (3) getrennt sind.

12. Verfahren nach Anspruch 10 oder 11, **dadurch gekennzeichnet, dass** der Kunststoffüberzug (42) ein ringförmiger Streifen ist und dass der Streifen vollständig erhitzt wird.

13. Verfahren nach einem der Ansprüche 10 bis 12, **dadurch gekennzeichnet, dass** nur Teile des Kunststoffüberzugs (42) erhitzt werden, die dann die Klebepunkte (1) und/oder Klebeflächen (2) bilden oder wenigstens umfassen.

## Revendications

1. Récipient isolé (10) pour boissons chaudes ou similaires, comprenant :
a) une tasse interne (12) ayant un corps de tasse généralement tronconique (22) ;
b) une coque externe généralement tronconique (14) ;
c) un revêtement plastique thermo-soudable (42) sur au moins l'intérieur de ladite coque (14) ou l'extérieur dudit corps de tasse (22) ;
d) ladite tasse (12) étant installée dans ladite coque (14) de sorte que le revêtement (42) s'étende au moins le long d'un chemin de contact (3) proche d'un bord supérieur (9) de la coque (14), le long duquel la surface extérieure du chemin du corps de tasse (22) et la surface intérieure de la coque (14) sont en contact,
**caractérisé en ce que** au moins une trace de liaison (1) et/ou zone de liaison (2) destinées à relier ladite coque (14) audit corps de tasse (22) par ledit revêtement en plastique (42) n'est localement formée que dans ledit chemin de contact (3).

2. Récipient isolé selon la revendication 1, **caractérisé en ce que** ledit chemin de contact (3) est un chemin annulaire.

3. Récipient isolé selon la revendication 1 ou 2, **caractérisé en ce qu'**un certain nombre de traces de liaison (1) et/ou zones de liaison (2) sont formées le long du chemin de contact (3), toutes séparées les unes des autres par des pièces sans liaison dudit chemin de contact.

4. Récipient isolé selon l'une quelconque des revendications précédentes, **caractérisé en ce que** la trace de liaison (1) et/ou la zone de liaison (2) sont disposées côte à côte et séparées l'une de l'autre dans une direction horizontale (6) et/ou verticale (7) sur le chemin de contact (3).

5. Récipient isolé selon l'une des revendications précédentes, **caractérisé en ce que** les traces de liaison (1) et/ou les zones de liaison (2) sont uniformément réparties dans une direction circonférentielle (8) du chemin de contact (3).

6. Récipient isolé selon l'une des revendications précédentes, **caractérisé en ce que** le chemin de contact (3) circule totalement entre le corps de tasse (22) et la coque (14).

7. Récipient isolé selon l'une des revendications précédentes, **caractérisé en ce que** ledit chemin de contact (3) est ménagé entre une section de paroi supérieure annulaire (37) du corps de tasse (22) et une section essentiellement cylindrique supérieure (50) de ladite coque (14).

8. Récipient isolé selon l'une des revendications précédentes, **caractérisé en ce que** lesdites traces de liaison (1) et/ou les zones de liaison (2) sont disposées de manière immédiatement adjacente à un bord inférieur (41) d'une section de paroi supérieure annulaire (37) du corps de tasse (22) où un épaulement supérieur (32) est formé.

9. Récipient isolé selon l'une des revendications précédentes, **caractérisé en ce que** le corps de tasse (22) et/ou la coque (14) sont faits de carton revêtu dudit revêtement de plastique thermo-soudable (42).

10. Procédé de fabrication d'un récipient isolé pour boissons chaudes ou similaires, comprenant les étapes consistant à :
a) former une coque généralement tronconique (14) ;
b) chauffer un revêtement plastique thermo-soudable (42) ménagé à l'intérieur de ladite coque (14) et/ou sur l'extérieur d'une tasse généralement tronconique (12) à son point de fusion ;
c) insérer ladite tasse (12) dans ladite coque (14) jusqu'à ce que l'extérieur de la paroi de tasse (13) se place contre l'intérieur de la coque (14) le long d'un chemin de contact (3) près du bord supérieur (9) de la coque (14), de sorte que le revêtement en plastique fondu s'étende au moins le long dudit chemin de contact (3),
**caractérisé par**
d) le positionnement d'un élément annulaire ou premier élément (17) avec au moins un élément de pression pouvant être déplacé ou saillant radialement (19) à l'intérieur du corps de tasse (22) et
e) la compression dudit élément de pression contre un élément externe ou second élément (18) pour comprimer les parois (13, 16) du corps de tasse (22) et de la coque (14) avec les deux éléments, de façon à former une ou plusieurs traces de liaison (1) et/ou des zones de liaison (2).

11. Procédé selon la revendication 10, dans lequel la coque et la paroi de tasse (16, 13) sont comprimées ensemble en formant une pluralité de traces de liaison (1) et/ou des zones de liaison (2) pour lier localement ladite coque à ladite tasse, lesdites traces et/ou zones de liaison étant séparées les unes des autres par des parties non liantes, le long dudit chemin de contact (3).

12. Procédé selon les revendications 10 ou 11, **caractérisé en ce que** ledit revêtement plastique (42) est une bande annulaire et que ladite bande annulaire est totalement chauffée.

13. Procédé selon l'une des revendications 10 à 12, **caractérisé en ce que** seulement des pièces dudit revêtement plastique (42) sont chauffées, et qu'elles forment ensuite ou au moins comprennent lesdites traces de liaison (1) et/ou des zones de liaison (2).
